# EUROPÄISCHE PATENTSCHRIFT

(11) **EP 3 465 151 B1**
(45) Veröffentlichungstag und Bekanntmachung des Hinweises auf die Patenterteilung: **12.10.2022**
(21) Anmeldenummer: 17726941.2
(22) Anmeldetag: 31.05.2017
(51) Int. Cl.: G01N 21/359, B07C 5/342, G01N 21/3554, G01N 21/94

(54) **VERFAHREN UND VORRICHTUNG ZUR ANALYSE INHOMOGENER SCHÜTTGÜTER**
PROCESS AND INSTALLATION FOR ANALYSING BULK MATERIALS
PROCÉDÉ ET DISPOSITIF D'ANALYSE POUR MATÉRIAUX EN VRAC

(30) Priorität: 31.05.2016 DE 102016109999
(43) Veröffentlichungstag der Anmeldung: 10.04.2019
(73) Patentinhaber: MTM Plastics GmbH, 99759 Niedergebra (DE)
(72) Erfinder: PETERS, Tobias, 37339 Gernrode (DE); BÖTTNER, Ralf, 99706 Sondershausen (DE); MEYER, Torsten, 99755 Ellrich (DE); SCRIBA, Michael, 95445 Bayreuth (DE)
(74) Vertreter: Maikowski & Ninnemann Patentanwälte Partnerschaft mbB
(86) Internationale Anmeldenummer: PCT/EP2017/063121
(87) Internationale Veröffentlichungsnummer: WO 2017/207610

(56) Entgegenhaltungen:
- EP-A2- 2 823 945
- DE-A1- 19 800 521
- DE-U1-202007 014 466
- JP-A- 2002 267 599
- Anonymous: "Monitoring bales of plastic waste", , 12. Juni 2015 (2015-06-12), Seiten 1-4, XP055393451, Gefunden im Internet: URL:https://web.archive.org/web/2015061202 3701/http://www.perception-park.com/monito ring-bales-plastic-waste [gefunden am 2017-07-25]
- MONICA MORONI ET AL: "PET and PVC Separation with Hyperspectral Imagery", SENSORS, Bd. 15, Nr. 1, 20. Januar 2015 (2015-01-20), Seiten 2205-2227, XP055393288, DOI: 10.3390/s150102205

## Beschreibung

Die Erfindung betrifft ein Verfahren und eine Vorrichtung zur Analyse des Kunststoffanteils von inhomogenen Schüttgütern, die zu Ballen verpresst wurden. Vorzugsweise wird durch die vorliegende Erfindung die Bestimmung des Anteils an Polypropylen und Polyethylen in einem Ballen ermöglicht.

Es sind die verschiedensten Methoden der Kunststoffrückgewinnung aus kunststoffreichen Abprodukten, wie Verpackung, Folien, Verbundstoffen, Hohlkörpern bekannt. Dabei handelt es sich um Verbrauchsabfälle, die vorwiegend im häuslichen Bereich im Hausmüll anfallen. In vielen Ländern weltweit werden diese Kunststoffabfälle durch getrennte Sammlung aus dem Hausmüll wiedergewonnen und der Wiederaufbereitung zugeführt. Weniger Beachtung wurde bislang Kunststoffabfällen geschenkt, die im kommunalen und industriellen Bereich anfallen. Dazu gehören die so genannten Hartkunststoffe, wie Kisten und Behälter, Spielzeug, Industrieverpackungen, Rohre, Haushaltswaren, Gartenmöbel, medizinische Verpackungen und Geräte, Koffer und Küchengeräte.

Polyolefine ist der Sammelbegriff für Kunststoffarten, die verschiedene Polyethylene, wie LDPE (Low Density Polyethylen), LLDP (Linear Low Density Polyethylen) und HDPE (High Density Polyethylen) und Polypropylen enthalten. Zusammen bilden sie über 47 % (11,2 Mio Tonnen) des Gesamtjahresverbrauches an Kunststoff von 24,1 Mio Tonnen in Europa.

Die lose anfallenden unsortierten Kunststoffabfälle werden in der Regel zu Ballenware verpresst. Dadurch wird sowohl die Lagerung als auch der Transport erleichtert. Bei der Verpressung zu Ballen, werden die losen Kunststoffabfälle schichtweise aufeinander gepresst, bis ein sogenannter Ballen entstanden ist. Die Abmessungen der Grund und Seitenflächen eines solchen Ballens liegen meist ungefähr im Bereich von 1m × 1m.

Die Ballen werden dann unter anderem an Aufbereitungsanlagen geliefert, in denen aus den unsortierten Kunststoffabfällen einzelne Komponenten abgetrennt und für die Wiederverwendung aufbereitet werden. Insbesondere Polyolefine sind hierbei von besonderem Interesse. Bei der Anlieferung des Rohmaterials in Form von Ballenware an Aufbereitungsanlagen ist es für die Betreiber der Aufbereitungsanlagen von großem wirtschaftlichem Interesse, die Qualität der Ballen möglichst genau zu kennen. Die "Qualität der Ballenware" beschreibt in diesem Zusammenhang den Anteil an zur Wiederverwertung geeigneten Kunststoffen im Ballen. Von besonderer Bedeutung ist dabei zum Beispiel der Anteil an Polyolefinen im gesamten Ballen. Für die Ausbeute an wiederverwertbaren Kunststoffen, die mittels herkömmlicher Verfahren der Wideraufbereitung aus einem Ballen gewonnen werden kann, ist der Anteil an wiederverwertbaren Kunststoffen in der Rohware, die in Form des gepressten Ballens angeliefert wird, also essentiell. Es ist allerdings bekannt, dass die Qualität der angelieferten Ballenware um bis zu 30% schwanken kann, was sich stark auf die Ausbeute der angewendeten Wiederaufbereitungsverfahren auswirkt. Mit den aus dem Stand der Technik bekannten Mitteln ist eine Qualitätsprüfung gegenwärtig nur sehr aufwändig durchführbar. Darüber hinaus ist die Qualitätsprüfung mit den gegenwärtig zur Verfügung stehenden Mitteln und Maßnahmen nicht reproduzierbar. Außerdem kann nur eine ungenügende Dokumentation der Qualitätsprüfung vorgenommen werden. Damit ist eine Beweissicherung als Nachweis über die gelieferte Qualität der Ballenware nur unzureichend möglich. Diese ist im Fall von Reklamationen jedoch für eine objektive Bewertung unerlässlich.

Herkömmlicherweise wird die Qualität der Ballen stichprobenartig von Hand bestimmt. Hierfür wird von einem Mitarbeiter des Betreibers der Aufbereitungsanlage eine Stichprobe aus einem Ballen entnommen, und von Hand sortiert. Eine Stichprobe umfasst typischerweise etwa 80kg Abfallgemisch aus einem Ballen. Nach dem Sortieren per Hand erfolgt die Bestimmung der Anteile von gewünschten Kunststoffarten, wie Polyethylen und Polypropylen, sowie von Störstoffen, wie beispielsweise Metall, Holz, Schmutz, Steine, unerwünschte Kunststoffarten usw.. Diese Anteilsbestimmung erfolgt typischerweise durch Bestimmung des Gewichts mittels Wiegen.. Für die Bewertung der Qualität eines einzelnen Ballens werden auf diese Art und Weise 4 Stunden benötigt. Damit ist pro Tag die Kontrolle von höchstens 2-3 Ballen möglich. Pro LKW-Ladung werden jedoch im Schnitt bis zu 50 Ballen in den Aufbereitungsanlagen angeliefert. Nicht selten werden bis zu 70 LKW Ladungen täglich in einer Aufbereitungsanlage verarbeitet. Somit ist momentan die Qualitätskontrolle angelieferten Ballen völlig ungeeignet, um eine umfassende Beurteilung der Qualität einzelner Ballen hinsichtlich des Anteils an den gewünschten Kunststoffarten zu ermöglichen. Da der Anteil der gewünschten Kunststoffarten um bis zu 30 % schwanken kann, ist es außerdem unmöglich, von der Bewertung der Qualität eines Ballens auf die Qualität eines zweiten Ballens bzw. der Qualität einer gesamten LKW-Ladung zu schließen. Die Betreiber von Abfallaufbereitungsanlagen tragen deshalb ein hohes wirtschaftliches Risiko, da an die Lieferanten der Ballen eine Vergütung gezahlt werden muss, deren Höhe unabhängig von der Qualität der Ballen ist. In den Ballen enthaltene Störstoffe müssen außerdem von den Betreibern der Abfallaufbereitungsanlagen teuer entsorgt werden.

Verfahren und Vorrichtungen zur Bestimmung der Zusammensetzung von Ballen hinsichtlich verschiedener Kunststoffarten sind beispielsweise aus der Internetpublikation "Monitoring bales of plastic waste" (https://web.archive.org/web/20150612023701/http:// www.perception-park.com/monitoring-bales-plastic-waste) bekannt, wobei mit Hilfe einer Hyperspektralkamera NIR-Spektren eines Ballens aufgenommen und ausgewertet werden.

Der Erfindung liegt die Aufgabe zu Grunde, ein Verfahren und ein Vorrichtung zur Verfügung zu stellen, die eine schnelle, reproduzierbare und dokumentierbare Qualitätskontrolle von zu Ballen verpresstem Kunststoffabfall ermöglicht.

Die vorliegende Erfindung stellt dafür ein Verfahren zur Verfügung, das die in Anspruch 1 definierten Schritte umfasst.

Das Verfahren ist erfindungsgemäß mit Hilfe einer Vorrichtung durchführbar, die die Merkmale gemäß Anspruch 10 umfasst.

### Detaillierte Beschreibung der Erfindung

Die vorliegende Erfindung stellt ein Verfahren zur Verfügung, das die in Anspruch 1 definierten Schritte umfasst.

In einer Ausführungsform des erfindungsgemäßen Verfahrens wird ein Nah-Infrarotspektrum (NIR-Spektrum) von mindestens zwei Seiten des Ballens aufgenommen, d.h. der von der Oberfläche des Ballens reflektierte Anteil der Nah-Infrarotstrahlung wird detektiert.

Das NIR-Spektrum hat die Eigenschaft, dass es spezifisch für verschiedene Materialien ist.

Insbesondere sind die NIR-Spektren von verschiedenen Kunststoffen, z.B. von Polyethylen und Polypropylen voneinander und von anderen Kunststoffen unterscheidbar. Mit Hilfe des NIR-Spektrums von einer Oberfläche eines Ballens kann daher der Anteil an Kunststoffen an dieser Oberfläche bestimmt werden. Ein großer Vorteil der NIR-Technik ist es, dass die Ergebnisse der Messungen gut reproduzierbar sind. Die Ergebnisse der NIR-Messungen werden in Form von Spektren erhalten und können gespeichert und damit einfach dokumentiert werden. Eine Beweissicherung der Qualität von angelieferter Ballenware, zum Beispiel gegenüber Lieferanten, wird dadurch ermöglicht.

Um den Anteil bestimmter Kunststoffarten, insbesondere von Polyolefinen, möglichst genau zu bestimmen, werden in der bevorzugten Ausführungsform der Erfindung NIR-Spektren von mindesten 2, 3, 4 oder 5 Seiten des Ballens oder von allen 6 Seiten des Ballens aufgenommen.

Die Aufnahme von NIR-Spektren von mehr als einer Seite des Ballens ist von besonderem Vorteil, da die Oberflächen der zwei Deckflächen des Ballens, von denen aus der lose Kunststoffabfall verpresst wurde, lediglich die Zusammensetzung der ersten bzw. letzten verpressten Schicht des losen Kunststoffabfalls abbilden, während die Seitenflächen des Ballens einen Querschnitt der Ränder aller zusammengepressten Schichten der losen Kunststoffe abbilden. Die Auswertung der NIR-Spektren der Seitenflächen spiegelt damit die Materialzusammensetzung aller zusammengepressten Schichten wieder, während die NIR-Spektren der Deckflächen lediglich die Materialzusammensetzung der ersten bzw. letzten Schicht des losen Kunststoffabfalls abbilden. Zudem werden die Ballen üblicherweise in Folie eingeschweißt angeliefert, wobei die für das Einschweißen verwendete Folie in der Regel nicht durchsichtig ist. Dadurch ist es von außen nicht ohne weiteres unterscheidbar, ob die mittels einer Nahinfrarotkamera untersuchte Fläche des Ballens gerade eine Seitenfläche repräsentiert, die alle zusammengepressten Abfallschichten abbildet, oder ob die zu untersuchende Fläche eine der beiden zuvor beschriebenen Deckflächen darstellt.

In einer Ausführungsform des erfindungsgemäßen Verfahrens werden NIR-Spektren von 1 Seitenfläche, vorzugsweise von 2 Seitenflächen oder 3 Seitenflächen, und einer Deckfläche aufgenommen.

In einer besonders bevorzugten Ausführungsform des erfindungsgemäßen Verfahrens werden NIR-Spektren von allen 4 Seitenflächen des Ballens und eine NIR-Spektrum von einer Deckfläche aufgenommen.

Beim Verpressen der Kunststoffabfälle werden häufig ebenfalls Verunreinigungen, wie zum Beispiel Holz, Metall, Schmutz, Steine oder unerwünschte Kunststoffe mit in den Ballen gepresst. Im NIR-Spektrum können solche Verunreinigungen ebenfalls detektiert und identifiziert werden. Darüber hinaus ist im NIR-Spektrum auch Wasser identifizierbar, so dass eine Bestimmung des Wasseranteils vorgenommen werden kann. Schwarze und sehr dunkle Kunststoffteilchen (z.B. dunkelbraun, dunkelblau, dunkelgrau, dunkelrot) können Infrarotstrahlen nicht oder nur ungenügend reflektieren. Je dunkler die Farbe der Kunststoffteilchen ist, desto höher ist der Anteil der Infrarotstrahlung, der von den Kunststoffteilchen absorbiert wird. Daher können Kunststoffanteile mit schwarzen oder sehr dunklen Farben mit der NIR-Technik nicht oder nur ungenügend detektiert werden. Zur Detektion von dunklen Störstoffen bzw. Kunststoffen mit dunkler Farbe kommen deshalb gemäß der Erfindung visuelle Methoden zum Einsatz. Besonders bevorzugt ist der Einsatz von Kameras, wie zum Beispiel Farbkameras.

In der bevorzugten Ausführungsform umfasst das erfindungsgemäße Verfahren deshalb die Aufnahme von Bildern der Ballen durch ein visuelles System. Bei diesem visuellen System handelt es sich in einer besonders bevorzugten Ausführungsform um eine Farbkamera. Mit Hilfe der Abbildung des visuellen Systems können die Anteile an dunklen Störstoffen und dunklen Kunstsoffen auf der Oberfläche des Ballens bestimmt werden.

In einer Ausführungsform des erfindungsgemäßen Verfahrens können die Ballen zur

Aufnahme der NIR-Spektren und zur Aufnahme von Bildern durch ein visuelles System an einer Vorrichtung, die die Nahinfrarotkamera und ein visuelles Systemumfasst, mit Hilfe eines Transportmittels vorbeigeführt werden.. In einer bevorzugten Ausführungsform des erfindungsgemäßen Verfahrens handelt es sich bei dem Transportmittel um ein Transportband.

In einer weiteren bevorzugten Ausführungsform des erfindungsgemäßen Verfahrens handelt es sich bei dem Transportmittel um einen Drehteller, wodurch die Ballen durch eine drehbare Vorrichtung um eine ihrer Achsen gedreht werden. Damit werden die einzelnen Seiten eines Ballens für die Aufnahme eines NIR-Spektrums und für die Aufnahme eines Bildes durch ein visuelles System zugänglich.

Erfindungsgemäß werden die aufgenommenen NIR-Spektren anschließend in einer Auswertevorrichtung für NIR-Spektren analysiert. Anhand der Spektren wird beispielsweise mittels einer geeigneten herkömmlichen Software der Anteil einzelner Kunststoffarten pro Ballen berechnet. In einer bevorzugten Ausführungsform wird der Anteil an Polyolefinen pro Ballen berechnet. In einer ganz besonders bevorzugte Ausführungsform wird der Anteil an Polyethylen und Polypropylen pro Ballen berechnet.

Die Auswertevorrichtung umfasst vorzugsweise einen konventionellen Prozessor, eine Software zur Steuerung der Komponenten und zur Meßwertverarbeitung und -auswertung. Bei der Auswertevorrichtung handelt es sich beispielsweise um einen Steuercomputer oder um einen Prozessrechner.

Werden, wie anspruchsgemäß definiert, von einem Ballen NIR-Spektren von mehreren Seiten aufgenommen, so können die Ergebnisse dieser Messungen in geeigneter Weise weiterverarbeitet werden, um repräsentative Werte für den Anteil der einzelnen Kunststoffarten pro Ballen zu erhalten. Eine geeignete Weiterverarbeitung stellt die Bildung eines Mittelwertes aus allen Messwerten dar. Alternativ möglich ist die Bildung eines gewichteten Mittelwertes aus den einzelnen Messdaten, wobei die Messdaten der verschiedenen Seiten eines Ballens mit einem geeigneten Wert gewichtet werden.

In einer weiteren Ausführungsform des erfindungsgemäßen Verfahrens wird ein Bild durch ein visuelles System, vorzugsweise einer Farbkamera, von der mindestens einen Seite des Ballens aufgenommen, von dem auch ein NIR-Spektrum aufgenommen wird. Das Bild des visuellen Systems wird hinsichtlich der Anteile von Störstoffen oder auch von Kunststoffen an der Oberfläche des Ballens analysiert, die aufgrund ihrer sehr dunklen Farbe mit Hilfe der NIR-Technik nicht detektiert werden können. Die mittels des visuellen Systems aufgenommenen Bilder können entweder manuell oder mit Hilfe einer geeigneten, herkömmlichen Bildauswertesoftware ausgewertet werden.

In einer weiteren Ausführungsform des erfindungsgemäßen Verfahrens werden von allen Seiten des Ballens Bilder durch ein visuelles System, vorzugsweise Farbkameras, aufgenommen, von denen auch NIR-Spektren aufgenommen wurden, und entsprechend in die Auswertung hinsichtlich Störstoffen und dunklen Kunststoffen einbezogen

Wird ein gewichtetes Mittel der Messdaten der NIR-Spektren von den unterschiedlichen Seiten des Ballens berechnet, so kann der Anteil an Störstoffen, der durch das visuelle System bestimmt wurde, als Grundlage für die Wahl eines Wichtungswertes dienen. Das heißt, die Anteile an Kunststoffarten werden für eine Seite eines Ballens durch ein NIR-Spektrum bestimmt. Ebenso wird der Anteil an Störstoffen sehr dunkler Farbe auf der Grundlage des Bildes durch ein visuelles System für die gleiche Seite des Ballens bestimmt und als Grundlage für die Wahl des Wichtungswertes genutzt.

Die NIR-Spektren sowie die daraus berechneten Anteile von bestimmten Kunststoffarten pro Ballen werden erfindungsgemäß auf einem geeigneten Speichermedium gespeichert. Das Speichermedium kann beispielsweise Bestandteil der Auswertevorrichtung sein. Ebenso werden die Bilder des visuellen Systems gespeichert. Dadurch wird eine umfangreiche und insbesondere beweissichere Dokumentation der Qualität der Ballenware ermöglicht. Die Speicherung der Daten ist über einen längeren Zeitraum unkompliziert möglich, wodurch die Beurteilung der Qualität von Lieferanten der Ballen über einen längeren Zeitraum hinweg ermöglicht wird.

Mit den aus dem Stand der Technik bekannten Verfahren zur Qualitätsprüfung ist für einen Mitarbeiter, wie oben bereits beschrieben, lediglich eine Prüfung von 2-3 Ballen pro Tag durchführbar. Das erfindungsgemäße Verfahren ermöglicht eine wesentlich schnellere Qualitätsprüfung eines Ballens. Die Aufnahme eines NIR-Spektrums, eines Bildes mit einem visuellen System sowie die Auswertung und Speicherung dieser Daten kann unproblematisch innerhalb weniger Minuten, beispielsweise einer Minute erfolgen. Selbst bei der Aufnahme von NIR-Spektren und von Bildern mittels eines visuellen Systems von mehr als einer Seite des Ballens liegt die Bearbeitungszeit im Bereich von Minuten. Damit stellt die vorliegende Erfindung ein Verfahren zur Verfügung, welches die Qualitätskontrolle von Ballen in einer Geschwindigkeit durchführt, die es ermöglicht, alle angelieferten Ballen einer LKW-Ladung in kurzer Zeit, bzw. aller in einer Aufbereitungsanlage pro Tag angelieferten Ballen einer Qualitätskontrolle zu unterziehen. Damit ist, im Vergleich zu den bisher genutzten Verfahren, nicht nur eine wesentlich umfangreichere Qualitätskontrolle, sondern sogar eine vollumfängliche Qualitätskontrolle möglich. Durch die beweissichere Speicherung der Ergebnisse der Qualitätskontrollen ist es für die Betreiber der Aufbereitungsanlagen nunmehr möglich, ganze LKW-Ladungen von Kunststoffabfällen, die Ballen mit einem nur ungenügenden Anteil an den gewünschten Kunststoffarten aufweisen, bereits bei der Eingangskontrolle zu erkennen und zurückzuweisen. Dadurch kann das Kostenrisiko der Betreiber der Aufbereitungsanlagenerheblich minimiert werden. Das erfindungsgemäße Verfahren führt außerdem zu einer Verbesserung der Kosteneffizienz der Qualitätskontrolle.

In einer weiteren Ausführungsform betrifft die Erfindung eine Vorrichtung zur Durchführung des oben beschriebenen Verfahrens, wobei die Vorrichtung die in Anspruch 10 definierten Merkmale umfasst.

In einer Ausführungsform umfasst die erfindungsgemäße Vorrichtung mindestens eine Nah-Infrarot Kamera zur Aufnahme eines NIR-Spektrums. Es ist auch möglich, dass die erfindungsgemäße Vorrichtung 1, 2, 3, 4, 5 oder 6 Nah-Infrarot Kameras umfasst.

In der bevorzugten Ausführungsform umfasst die erfindungsgemäße Vorrichtung eine Nah-Infrarot Kamera zur Aufnahme von NIR-Spektren und ein visuelles System zur Aufnahme von Bildern, wobei das visuelle System vorzugsweise eine Farbkamera ist.

In einer weiteren Ausführungsform umfasst die erfindungsgemäßen Vorrichtung 1, 2, 3, 4, 5 oder 6 NIR-Kameras zur Aufnahme von NIR-Spektren und mindestens ein visuelles System zur Aufnahme von Bildern, wobei das visuelle System vorzugsweise eine Farbkamera ist. Es ist auch möglich, dass die erfindungsgemäße Vorrichtung 1, 2, 3, 4, 5 oder 6 NIR-Kameras und 1, 2, 3, 4, 5 oder 6 visuelle Systeme zur Aufnahme eines Bildes umfasst.

In einer Ausführungsform der Erfindung wird der Ballen, dessen Qualität geprüft werden soll, mittels einer Transporteinrichtung an einer Vorrichtung vorbei befördert, an der die NIR-Kameras angebracht sind. Solch eine Vorrichtung, an der die NIR-Kameras angebracht sind, kann beispielsweise eine brückenähnliche Konstruktion sein. Die NIR-Kameras sind dabei vorteilhafterweise so an der brückenähnlichen Konstruktion angebracht, dass beim Durchfahren der brückenähnlichen Konstruktion von 3 Seiten des Ballens ein NIR Spektrum aufgenommen werden kann. In einer besonders bevorzugten Ausführungsform der Erfindung umfasst die Vorrichtung neben der mindestens einen NIR-Kamera immer ein visuelles System zur Aufnahme eines Bildes. In einer weiteren bevorzugten Ausführungsform umfasst die erfindungsgemäße Vorrichtung neben jeder NIR-Kamera auch immer ein visuelles System, wie beispielsweise eine Farbkamera, zur Aufnahme eines Bildes. Mit dieser Ausführungsform ist es möglich 3 Seiten eines Ballens zeitgleich sowohl mittels NIR-Spektroskopie als auch visuell mittels Farbkamera zu prüfen. Diese Ausführungsform ermöglicht damit einen schnellen Prozessablauf und kann durch den Transport der Ballen auf einem Transportband in die anschließenden Aufbereitungsprozesse intergiert werden.

In einer anderen Ausführungsform der Erfindung kann eine NIR-Kamera an einer Säule angebracht sein, die optional außerdem ein visuelles System wie eine Farbkamera umfasst. Vor solch einer Säule kann sich beispielsweise eine drehbare Vorrichtung, wie etwa ein Drehteller, befinden, auf dem sich der zu prüfende Ballen befindet. Durch das Drehen des Ballens mit Hilfe der drehbaren Vorrichtung, können nacheinander 4 Seiten des Ballens geprüft werden. In einer bevorzugten Ausführungsform der Erfindung befindet sich senkrecht zu der Säule, die eine NIR-Kamera umfasst, ein Trägerelement oberhalb der drehbaren Vorrichtung, der ebenfalls eine NIR-Kamera umfassen kann. Neben der NIR-Kamera kann an diesem Träger ebenfalls ein visuelles System, wie eine Farbkamera angebracht sein. Der Träger ist vorzugsweise so positioniert, dass durch die NIR-Kamera zusätzlich ein NIR-Spektrum der Oberseite des Ballens aufgenommen werden kann, während durch die an der Säule angebrachte NIR-Kamera NIR-Spektren der Seitenflächen aufgezeichnet werden. Diese Ausführungsform ermöglicht es, mit geringem Zeitaufwand 5 Seiten eines Ballens zu prüfen. Diese Ausführungsform ermöglicht damit einen schnellen Prozessablauf und kann durch den Transport der Ballen auf einem, weiter von der erfindungsgemäßen Vorrichtung umfassten Transportband, in die anschließenden Aufbereitungsprozesse intergiert werden.

In einer bevorzugten Ausführungsform der Erfindung sind mindestens eine NIR-Kamera und mindestens ein visuelles System zur Aufnahme von Bildern an einer mobilen Vorrichtung angebracht. Diese mobile Vorrichtung kann zum Beispiel ein Gabelstapler oder eine fahrbare Konstruktion sein. Der Vorteil dieser Ausführungsform liegt darin, dass die Vorrichtung flexibler eingesetzt werden kann. Dadurch ist es zum Beispiel möglich, eine erste Qualitätskontrolle von Ballen bereits beim Antransport, noch auf dem LKW, d.h. vor dessen Entladung, durchzuführen. Vor dem Entladen kann ein Gabelstapler oder eine fahrbare Konstruktion, der mit der erfindungsgemäßen Vorrichtung ausgestattet ist, an den Ballen, die sich noch auf einem LKW befinden, vorbeifahren und die zugängliche Seiten der Ballen bereits vor dem Entladen einer ersten Qualitätsprüfung unterziehen. Im Falle unzureichender Qualität kann damit bereits vor dem Entladen über die Qualität der Ballen entschieden werden. Damit können im Zweifelsfall ganze LKW-Ladungen sofort reklamiert werden, Lagerkapazitäten eingespart und Folgekosten gespart werden.

Gemäß einer weiteren Ausführungsform der Erfindung kann die NIR-Kamera und ein visuelles System, wie eine Farbkamera, an einer portablen Trägervorrichtung angebracht sein. Die Größe des gesamten Aufbaus kann damit so gering gehalten werden, dass alle Elemente der erfindungsgemäßen Vorrichtung in einem PKW verstaut werden können. Diese Ausführungsform ermöglicht es, Qualitätsprüfungen flexibel an jedem beliebigen Ort vorzunehmen. Die Auswertevorrichtung kann in dieser Ausführungsform beispielsweise ein Laptop sein.

Durch das erfindungsgemäße Verfahren und die erfindungsgemäße Vorrichtung ist es möglich, die Qualität von zu Ballen gepressten Kunststoffabfällen einfach, ggf. ortsunabhängig und flexibel zu bestimmen. Dabei wird der Anteil an Kunststoffen an mindestens einer Oberfläche eines Ballens mit Hilfe eines NIR-Spektrums und eines Bildes eines visuellen Systems bestimmt. In der bevorzugten Ausführungsform kann der Anteil an Kunststoffen eines Ballens an mehreren Seiten eines Ballens bestimmt werden. Dadurch wird die Genauigkeit des Verfahrens erhöht. Durch das erfindungsgemäße Verfahren und die erfindungsgemäße Vorrichtung ist es somit möglich, eine Qualitätskontrolle von zu Ballen gepressten Kunststoffabfällen vorzunehmen, die schnell, reproduzierbar und dokumentierbar ist.

Die Erfindung wird nachfolgend anhand von 3 Figuren erläutert.

### Figuren

- **Figur 1**: Ausführungsform der erfindungsgemäßen Vorrichtung mit 3 NIR-Kameras und 3 visuellen Systemen an einer brückenähnlichen Konstruktion, wobei der Ballen mit einem Transportband transportiert wird.
- **Figur 2**: Ausführungsform der erfindungsgemäßen Vorrichtung mit 2 NIR-Kameras und 2 visuellen Systemen an einer Säule mit einem Trägerelement, wobei der Ballen auf einem Drehteller liegt.
- **Figur 3**: Ausführungsform der erfindungsgemäßen Vorrichtung, wobei eine NIR-Kamera und ein visuelles System an einem Gabelstapler angebracht sind.

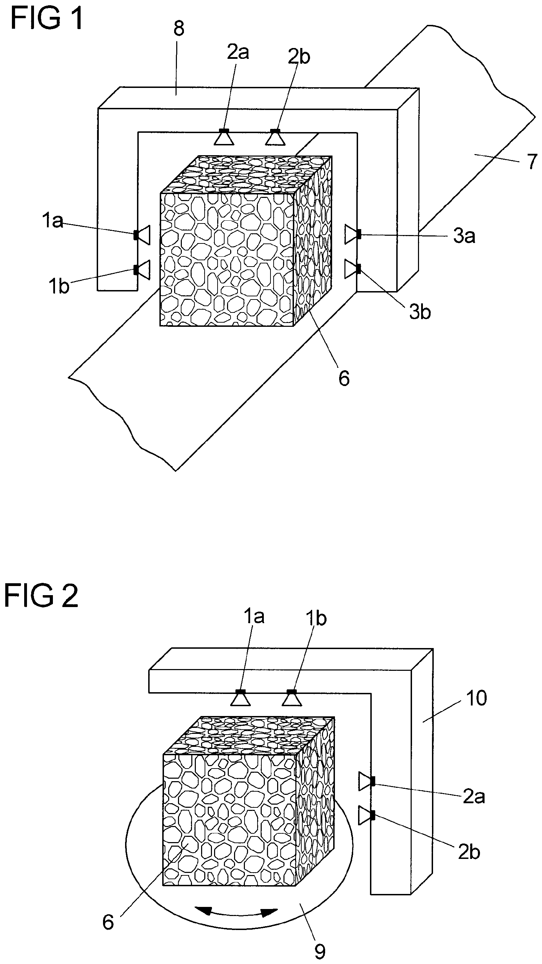

Figur 1 zeigt eine Ausführungsform der erfindungsgemäßen Vorrichtung, wobei der Ballen (6) durch ein Transportband (7) durch eine brückenähnliche Konstruktion (8) befördert wird. Die brückenähnlichen Konstruktion (8) besteht aus zwei Säulen und einem Querstück, das die beiden Säulen verbindet. An einer Säule ist eine NIR-Kamera (1a) und ein visuelles System (1b) angebracht, an der zweiten Säule ist ebenfalls eine NIR-Kamera (3a) und ein visuelles System (3b) angebracht. Am Querstück befindet sich eine NIR-Kamera (2a) und ein visuelles System (2b). Alle NIR-Kameras sowie die visuellen Systeme sind so ausgerichtet, das ein Spektrum, bzw. ein Bild von der jeweiligen Seitenfläche des Ballens (6) aufgenommen wird, der in die Richtung der jeweiligen NIR-Kamera bzw. des jeweiligen visuellen Systems zeigt. In dieser Ausführungsform kann zeitgleich von 3 Seiten des Ballens (6) ein NIR-Spektrum und ein Bild durch ein visuelles System aufgenommen werden.

Figur 2 zeigt ein weiteres Ausführungsbeispiel der erfindungsgemäßen Vorrichtung. Der Ballen (6) lagert auf einem Drehteller (9). Neben dem Drehteller befindet sich eine Säule mit einem Trägerelement (10). Am Trägerelement ist eine NIR-Kamera (1a) angebracht und ein visuelles System (1b), an der Säule befindet sich ebenfalls eine NIR-Kamera (2a) und ein visuelles System (2b). Die Säule ist zum Drehteller so angebracht, dass die NIR-Kamera (2a) und das visuelle System (2b) ein NIR-Spektrum bzw. ein Bild von der ihnen zugewandten Seite des Ballens (6) aufnehmen können. Das Trägerelement überragt den Ballen (6) dabei derart, dass die NIR-Kamera (1a) und das visuelle System (1b) NIR-Spektrum bzw. ein Bild von der ihnen zugewandten Seite des Ballens (6) aufnehmen können. Durch das Drehen des Ballens (6) mit Hilfe des Drehtellers, können nacheinander 4 Seiten des Ballens (6) geprüft werden.

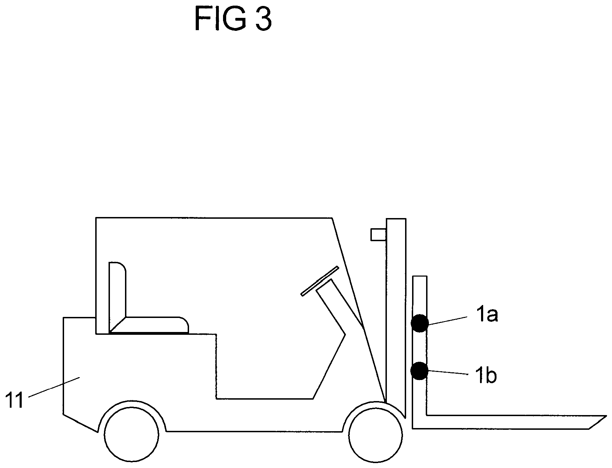

Figur 3 zeigt eine weitere Ausführungsform der erfindungsgemäßen Vorrichtung, wobei eine NIR-Kamera (1a) und ein visuelles System (1b) am beweglichen Teil eines Gabelstaplers (11) angebracht sind. Der Gabelstapler (11) kann dann an Ballen (6) die beispielsweise auf einem LKW gelagert sind vorbeifahren und die zugänglichen Seiten der Ballen (6) einer Qualitätsprüfung unterziehen.

### Bezugszeichen

- 1a: NIR-Kamera
- 1b: visuelles System
- 2a: NIR-Kamera
- 2b: visuelles System
- 3a: NIR-Kamera
- 3b: visuelles System
- 6: Ballen
- 7: Transportband
- 8: brückenähnliche Konstruktion
- 9: Drehteller
- 10: Säule mit Trägerelement
- 11: Gabelstapler

## Patentansprüche

1. Verfahren zur Analyse der Zusammensetzung inhomogener Schüttgüter, die zu Ballen verpresst sind, **dadurch gekennzeichnet, dass** das Verfahren die Schritte umfasst:
• Aufnahme mindestens eines Nah-Infrarot Spektrums von 2, 3, 4, 5 oder 6 Seiten des Ballens,
• Aufnahme eines Bildes von mindestens einer Seite des Ballens durch ein visuelles System zur Erkennung von Störstoffen,
• Analyse der aufgenommenen Nah-Infrarotspektren hinsichtlich der Anteile einzelner Kunststoffarten in der Zusammensetzung des Ballens und Analyse des durch ein
visuelles System aufgenommenen Bildes von mindestens einer Seite des Ballens hinsichtlich der Störstoffe in der Zusammensetzung des Ballens, und
• Speicherung der Daten des Nah-Infrarotspektrums und der ermittelten Zusammensetzung des Ballens,
wobei der Anteil an den einzelnen Kunststoffarten in der Zusammensetzung des Ballens, bestimmt wird;
wobei zur Ermittlung repräsentativer Werte für den Anteil der einzelnen Kunststoffarten pro Ballen ein Mittelwert oder ein gewichteter Mittelwert aus den NIR-Spektren von verschiedenen Seiten des Ballens gebildet wird.

2. Verfahren nach Anspruch 1, weiterhin umfassend die Beförderung des Ballens.

3. Verfahren nach Anspruch 1 **dadurch gekennzeichnet, dass** ein Nah-Infrarotspektrum von 3, 4, 5 oder 6 Seiten eines Ballens aufgenommen und analysiert wird.

4. Verfahren nach Anspruch 1 **dadurch gekennzeichnet, dass** ein Nah-Infrarotspektrum von mindestens einer Seitenfläche und mindestens einer Deckfläche des Ballens aufgenommen und analysiert wird.

5. Verfahren nach einem der vorangegangenen Ansprüche **dadurch gekennzeichnet, dass** visuelle System eine Farbkamera ist.

6. Verfahren nach einem der vorangegangenen Ansprüche **dadurch gekennzeichnet, dass** ein Bild durch ein visuelles System von der mindestens einen Seite des Ballens aufgenommen wird, von dem auch ein NIR-Spektrum detektiert wird.

7. Verfahren nach einem der vorangegangenen Ansprüche **dadurch gekennzeichnet, dass** durch das Bild, welches mit dem visuellen System aufgenommen wurde, der Anteil an Störstoffen bestimmt wird.

8. Verfahren nach einem der vorherigen Ansprüche, **dadurch gekennzeichnet, dass** der Wichtungsfaktor bei der Bildung des gewichteten Mittels auf Grundlage des Anteils an Störstoffen bestimmt wird, welcher durch das visuelle System bestimmt wurde.

9. Verfahren nach einem der vorangegangenen Ansprüche **dadurch gekennzeichnet, dass** in dem Ballen der Anteil an Verunreinigungen und/oder Wasser über das NIR-Spektrum bestimmt wird.

10. Vorrichtung zur Durchführung des Verfahrens nach Anspruch 1, wobei die Vorrichtung
• mindestens eine Nah-Infrarotkamera, die eingerichtet ist, Nah-Infrarotspektren aufzunehmen,
• mindestens ein visuelles System zur Aufnahme eines Bildes,
• eine Auswertevorrichtung für Nah-Infrarotspektren,
• eine Auswertevorrichtung für Bilder eines visuellen Systems, und
• ein Speichermedium,
umfasst, wobei die Vorrichtung dazu eingerichtet ist
• mindestens ein Nah-Infrarot Spektrum von 2, 3, 4, 5 oder 6 Seiten des Ballens mit der mindestens einen Nah-Infrarotkamera aufzunehmen,
• Bilder von mindestens einer Seite des Ballens durch das mindestens eine visuelle System zur Erkennung von Störstoffen aufzunehmen,
• eine Analyse der aufgenommenen Nah-Infrarotspektren mit der dafür vorgesehenen Auswertevorrichtung hinsichtlich der Anteile einzelner
Kunststoffarten in der Zusammensetzung des Ballens und eine Analyse des durch das mindestens eine visuelle System aufgenommenen Bildes von mindestens einer Seite des Ballens mit der dafür vorgesehenen Auswertevorrichtung hinsichtlich der Störstoffe in der Zusammensetzung des Ballens durchzuführen,
• die Daten des Nah-Infrarotspektrums und der ermittelten Zusammensetzung des Ballens auf dem Speichermedium zu speichern,
• zur Ermittlung repräsentativer Werte für den Anteil der einzelnen Kunststoffarten pro Ballen einen Mittelwert oder ein gewichteter Mittelwert aus den NIR-Spektren von verschiedenen Seiten des Ballens zu bilden, und
• den Anteil an den einzelnen Kunststoffarten in der Zusammensetzung des Ballens zu bestimmen.

11. Vorrichtung nach Anspruch 10, **dadurch gekennzeichnet, dass** die Vorrichtung zusätzlich ein Mittel zur Beförderung des Ballens umfasst.

12. Vorrichtung nach Anspruch 10 oder 11 **dadurch gekennzeichnet, dass** die Vorrichtung zusätzlich zu jeder NIR-Kamera immer ein visuelles System umfasst.

13. Vorrichtung nach Anspruch 11 oder nach Anspruch 12 **dadurch gekennzeichnet, dass** das Mittel zur Beförderung des Ballens als Transportband oder als Drehteller ausgeführt ist.

14. Vorrichtung nach einem der Ansprüche 10-12 **dadurch gekennzeichnet, dass** die Nah-Infrarotkamera und optional das visuelle System zur Aufnahme von Bildern an einer mobilen Vorrichtung angebracht ist.

15. Vorrichtung nach einem der Ansprüche 10-12 **dadurch gekennzeichnet, dass** die Nah-Infrarotkamera und optional das visuelle System zur Aufnahme von Bildern an einer portablen Trägervorrichtung angebracht sind.

## Claims

1. Method for analysing the composition of inhomogeneous bulk cargo, which is compressed into bales, **characterized in that** the method comprises the following steps:
• recording at least one near infrared spectrum of 2, 3, 4, 5 or 6 sides of the bale,
• recording an image of at least one side of the bale by way of a visual system for detecting contaminants,
• analysing the recorded near infrared spectra in respect of the proportions of individual plastics types in the composition of the bale and analysing the image of at least one side of the bale recorded by way of a visual system in respect of the contaminants in the composition of the bale, and
• storing the data of the near infrared spectrum and the determined composition of the bale,
wherein the proportion of the individual plastics types in the composition of the bale is determined;
wherein a mean value or a weighted mean value is calculated from the NIR spectra of various sides of the bale to ascertain representative values for the proportion of the individual plastics types per bale.

2. Method according to Claim 1, further comprising the conveyance of the bale.

3. Method according to Claim 1, **characterized in that** a near infrared spectrum of 3, 4, 5 or 6 sides of a bale is recorded and analysed.

4. Method according to Claim 1, **characterized in that** a near infrared spectrum of at least one lateral surface and at least one cover surface of the bale is recorded and analysed.

5. Method according to any one of the preceding claims, **characterized in that** a visual system is a colour camera.

6. Method according to any one of the preceding claims, **characterized in that** an image is recorded by a visual system of the at least one side of the bale of which an NIR spectrum is also detected.

7. Method according to any one of the preceding claims, **characterized in that** the proportion of contaminants is determined by way of the image which was recorded using the visual system.

8. Method according to any one of the preceding claims, **characterized in that** the weighting factor in the calculation of the weighted average is determined on the basis of the proportion of contaminants which was determined by the visual system.

9. Method according to any one of the preceding claims, **characterized in that** the proportion of impurities and/or water in the bale is determined via the NIR spectrum.

10. Apparatus for carrying out the method according to Claim 1, wherein the apparatus comprises
• at least one near infrared camera configured to record near infrared spectra,
• at least one visual system for recording an image,
• an evaluation apparatus for near infrared spectra,
• an evaluation apparatus for images of a visual system, and
• a storage medium,
wherein the apparatus is configured
• to record at least one near infrared spectrum of 2, 3, 4, 5 or 6 sides of the bale using the at least one near infrared camera,
• to record images of at least one side of the bale by way of the at least one visual system for detecting contaminants,
• to analyse the recorded near infrared spectra in respect of the proportions of individual plastics types in the composition of the bale using the evaluation apparatus provided to this end and analyse the image of at least one side of the bale recorded by way of the at least one visual system in respect of the contaminants in the composition of the bale using the evaluation apparatus provided to this end,
• to store the data of the near infrared spectrum and the ascertained composition of the bale on the storage medium,
• to calculate a mean value or a weighted mean value from the NIR spectra of various sides of the bale to ascertain representative values for the proportion of the individual plastics types per bale, and
• to determine the proportion of the individual plastics types in the composition of the bale.

11. Apparatus according to Claim 10, **characterized in that** the apparatus additionally comprises a means for conveying the bale.

12. Apparatus according to Claim 10 or 11, **characterized in that** the apparatus always comprises a visual system in addition to each NIR camera.

13. Apparatus according to Claim 11 or according to Claim 12, **characterized in that** the means for conveying the bale is embodied as a transportation belt or as a turntable.

14. Apparatus according to any one of Claims 10-12, **characterized in that** the near infrared camera and optionally the visual system for recording images are attached to a mobile apparatus.

15. Apparatus according to any one of Claims 10-12, **characterized in that** the near infrared camera and optionally the visual system for recording images are attached to a portable carrier apparatus.

## Revendications

1. Procédé permettant d'analyser la composition de matériaux en vrac non homogènes qui sont comprimés sous forme de balles, **caractérisé en ce que** le procédé comprend les étapes consistant à :
• enregistrer au moins un spectre proche-infrarouge de 2, 3, 4, 5 ou 6 faces de la balle,
• enregistrer une image d'au moins une face de la balle par un système visuel afin d'identifier des matières perturbatrices,
• analyser les spectres proche-infrarouge enregistrés quant aux parts de types de matière plastique individuels dans la composition de la balle, et analyser l'image enregistrée par un système visuel d'au moins une face de la balle quant aux matières perturbatrices dans la composition de la balle, et
• stocker les données du spectre proche-infrarouge et de la composition établie de la balle,
dans lequel la part de types de matière plastique individuels dans la composition de la balle est déterminée ;
dans lequel, pour l'établissement de valeurs représentatives de la part des types de matière plastique individuels de chaque balle, une moyenne ou une moyenne pondérée des spectres NIR de différentes faces de la balle est calculée.

2. Procédé selon la revendication 1, comprenant en outre le transport de la balle.

3. Procédé selon la revendication 1, **caractérisé en ce qu'**un spectre proche-infrarouge de 3, 4, 5 ou 6 faces d'une balle est enregistré et analysé.

4. Procédé selon la revendication 1, **caractérisé en ce qu'**un spectre proche-infrarouge d'au moins une face latérale et d'au moins une face de dessus de la balle est enregistré et analysé.

5. Procédé selon l'une quelconque des revendications précédentes, **caractérisé en ce que** le système visuel est une caméra couleur.

6. Procédé selon l'une quelconque des revendications précédentes, **caractérisé en ce qu'**un système visuel enregistre une image de ladite au moins une face de la balle dont un spectre NIR est également détecté.

7. Procédé selon l'une quelconque des revendications précédentes, **caractérisé en ce que** la part de matières perturbatrices est déterminée à l'aide de l'image qui a été enregistrée par le système visuel.

8. Procédé selon l'une quelconque des revendications précédentes, **caractérisé en ce que** le facteur de pondération lors du calcul de la moyenne pondérée est déterminé sur la base de la part de matières perturbatrices qui a été déterminée par le système visuel.

9. Procédé selon l'une quelconque des revendications précédentes, **caractérisé en ce que** dans la balle, la part de matières perturbatrices et/ou d'eau est déterminée par l'intermédiaire du spectre NIR.

10. Dispositif permettant d'exécuter le procédé selon la revendication 1, le dispositif comprenant
• au moins une caméra proche-infrarouge qui est conçue pour enregistrer des spectres proche-infrarouge,
• au moins un système visuel pour enregistrer une image,
• un dispositif d'évaluation pour des spectres proche-infrarouge,
• un dispositif d'évaluation pour des images d'un système visuel, et
• un support de stockage,
le dispositif étant conçu pour
• enregistrer au moins un spectre proche-infrarouge de 2, 3, 4, 5 ou 6 faces de la balle à l'aide de ladite au moins une caméra proche-infrarouge,
• enregistrer des images d'au moins une face de la balle par ledit au moins un système visuel afin d'identifier des matières perturbatrices,
• effectuer une analyse des spectres proche-infrarouge enregistrés, à l'aide du dispositif d'évaluation prévu à cet effet, quant aux parts de types de matière plastique individuels dans la composition de la balle, et une analyse de l'image enregistrée par ledit au moins un système visuel d'au moins une face de la balle, à l'aide du dispositif d'évaluation prévu à cet effet, afin d'identifier des matières perturbatrices dans la composition de la balle,
• stocker les données du spectre proche-infrarouge et de la composition établie de la balle sur le support de stockage,
• pour l'établissement de valeurs représentatives de la part des types de matière plastique individuels pour chaque balle, calculer une moyenne ou une moyenne pondérée à partir des spectres NIR de différentes faces de la balle, et
• déterminer la part des types de matière plastique individuels dans la composition de la balle.

11. Dispositif selon la revendication 10, **caractérisé en ce que** le dispositif comprend en outre un moyen pour transporter la balle.

12. Dispositif selon la revendication 10 ou 11, **caractérisé en ce que** le dispositif comprend en plus de chaque caméra NIR toujours un système visuel.

13. Dispositif selon la revendication 11 ou selon la revendication 12, **caractérisé en ce que** le moyen de transport de la balle est réalisé sous la forme d'une bande transporteuse ou d'un plateau tournant.

14. Dispositif selon l'une quelconque des revendications 10 à 12, **caractérisé en ce que** la caméra proche-infrarouge et en option le système visuel sont installés sur un dispositif mobile pour enregistrer des images.

15. Dispositif selon l'une quelconque des revendications 10 à 12, **caractérisé en ce que** la caméra proche-infrarouge et en option le système visuel sont installés sur un dispositif de support portable pour enregistrer des images.
